# DEMANDE DE BREVET EUROPEEN

(11) **EP 4 389 483 A2**
(43) Date de publication de la demande: **26.06.2024**
(21) Numéro de dépôt: 23219099.1
(22) Date de dépôt: 21.12.2023
(51) Int. Cl.: B60K 11/08, B60R 19/52

(54) **VOLET AFFLEURANT D'UN ENSEMBLE DE FACE AVANT**

(30) Priorité: 23.12.2022 FR 2214368
(71) Demandeur: VALEO SYSTEMES THERMIQUES, 78320 Le Mesnil Saint-Denis (FR)
(72) Inventeur: DURAISAMY, Shankar, 600130 Chennai (IN); SUBRAMANIAN, Arunkumar, 600130 Chennai (IN); VELASCO, Sebastien, 600130 Chennai (IN); RAGHAVAN, Parthasarathy, 600130 Chennai (IN); MOHAN, Arulkumaran, 600130 Chennai (IN)
(74) Mandataire: Valeo Systèmes Thermiques

(57) **Abrégé**

La présente invention concerne un ensemble de face avant (1) destiné à équiper un véhicule automobile, l'ensemble de face avant (1) comprenant une grille (2) et un dispositif d'obturation (4), la grille (2) comprenant au moins un passage (3) par lequel un flux d'air est apte à traverser la grille (2), le dispositif d'obturation (4) comprenant au moins un volet apte à prendre une première position dans laquelle le volet obture le passage (3) et une deuxième position dans laquelle le volet ouvre le passage (3), le volet comprenant un élément d'obturation qui s'étend au moins en partie dans le passage (3) de la grille (2) lorsque le volet est dans sa première position.

## Description

La présente invention concerne le domaine des dispositifs de régulation thermique, et plus particulièrement un ensemble de face avant d'un véhicule destiné à être traversé par un flux d'air.

Les véhicules, et notamment les véhicules automobiles, sont couramment équipés d'un ensemble de face avant apte à être traversé par un flux d'air. Ce flux d'air est utilisé, par exemple, pour opérer un échange de chaleur avec un échangeur de chaleur de face avant de sorte à faire fonctionner un système de climatisation et/ou de refroidissement ou un radiateur. De tels ensembles de face peuvent comprendre des systèmes de contrôle de ce flux d'air, communément désignés par l'acronyme anglais AGS pour « *Active Grille Shutter* ». Ils permettent notamment d'augmenter le coefficient de pénétration dans l'air quand le moteur ne nécessite pas d'être refroidi par un flux d'air extérieur, ce qui permet de réduire la consommation de carburant et la pollution émise par le véhicule.

Ces systèmes de contrôle de flux d'air sont généralement formés d'une grille au sein de laquelle des passages sont ménagés pour laisser passer le flux d'air. Le système comprend par ailleurs un dispositif d'obturation formé, par exemple, de volets pilotés par une unité de contrôle de sorte à autoriser ou interdire le passage du flux d'air à travers les passages ménagés dans la grille, notamment pour réduire le coefficient de pénétration dans l'air lorsque les volets interdisent le passage du flux d'air.

Ces dispositifs d'obturation présentent un premier inconvénient. En effet, l'étanchéité entre la grille et les volets mérite d'être améliorée.

Par ailleurs, ces dispositifs d'obturation présentent l'inconvénient d'être peu esthétique et notamment de former une surface de l'ensemble de face avant présentant de nombreux reliefs. La présente invention s'inscrit dans ce contexte et se propose de pallier au moins l'inconvénient susmentionné au moyen d'un ensemble de face avant qui présente une surface lisse, dans laquelle la distinction entre les volets et les passages de la grille est difficilement discernable.

Ainsi, la présente invention porte sur un ensemble de face avant destiné à équiper un véhicule automobile, l'ensemble de face avant comprenant une grille et un dispositif d'obturation, la grille comprenant au moins un passage par lequel un flux d'air est apte à traverser la grille, le dispositif d'obturation comprenant au moins un volet apte à prendre une première position dans laquelle le volet obture le passage et une deuxième position dans laquelle le volet ouvre le passage, le volet comprenant un élément d'obturation qui s'étend au moins en partie dans le passage de la grille lorsque le volet est dans sa première position.

L'élément d'obturation s'étend dans le passage de la grille de telle sorte que le flux d'air ne peut pas entrer par ledit passage. L'étanchéité de l'ensemble de face avant est ainsi améliorée.

On comprend que lorsque le volet est dans sa première positon, celui-ci est configuré pour qu'au moins une partie de l'ensemble de l'espace, avantageusement tout l'espace, défini par le passage soit comblé par l'élément d'obturation.

Selon une caractéristique de l'invention, la grille est délimitée par une première face et une deuxième face, le passage s'étendant entre la première face et la deuxième face, l'élément d'obturation du volet étant affleurant avec l'une desdites faces de la grille.

L'élément d'obturation et le passage présentent une dimension similaire de telle sorte que lorsque l'élément d'obturation est intégralement dans le passage, alors l'élément d'obturation du volet affleure l'une desdites faces de la grille.

Selon une caractéristique de l'invention, le volet présente une face de contact destinée à venir au contact d'une face de la grille qui est opposée à celle avec laquelle la portion du volet est affleurante. L'élément d'obturation fait saillie depuis cette face de contact. On comprend que lorsque l'élément d'obturation présente une dimension identique à la longueur du passage et que la face de contact du volet est au contact d'une face de la grille, l'élément d'obturation est affleurant avec la face opposée de la grille.

Selon une caractéristique de l'invention, la grille comprend un portion de support, ladite portion de support formant la partie de la grille distincte de l'au moins un passage, la face de contact du volet venant au contact de ladite portion de support.

Selon une caractéristique de l'invention, l'élément d'obturation du volet qui s'étend dans le passage de la grille présente une forme complémentaire dudit passage.

Selon une caractéristique de l'invention, l'élément d'obturation fait saillie de la face de contact du volet.

Selon une caractéristique de l'invention, le volet comprend un arbre de rotation et un pion de commande, l'ensemble de face avant comprenant au moins un levier lié à l'au moins un volet par le pion de commande, le levier étant mobile en translation pour changer la position du volet.

Selon une caractéristique de l'invention, l'au moins un volet comprend une pluralité d'éléments d'obturation, la grille comprenant une pluralité de passages, Au moins un des éléments d'obturation étant destiné à s'étendre dans un des passages dédié à l'élément d'obturation.

Selon une caractéristique de l'invention, le dispositif d'obturation comprend une pluralité de volets, au moins deux des volets passant simultanément de leur première position à leur deuxième position. Chaque volet est lié au levier ; le déplacement du levier entraine alors le déplacement de chaque volet. Avantageusement, tous les volets bougent simultanément.

Selon une caractéristique de l'invention, l'ensemble de face avant comprend au moins un dispositif lumineux apte à prendre une première configuration dans laquelle le dispositif lumineux est au droit du passage et une deuxième configuration dans laquelle le dispositif lumineux est au droit de la portion de support de la grille.

L'invention porte également sur un véhicule automobile comprenant un ensemble de face avant destiné à être traversé par un flux d'air et conforme à l'une quelconque des caractéristiques susmentionnées.

D'autres caractéristiques, détails et avantages de l'invention ressortiront plus clairement à la lecture de la description qui suit d'une part, d'exemples de réalisation donnés à titre indicatifs et non limitatifs en référence aux dessins schématiques annexés d'autre part, sur lesquels :
[Fig.1] représente une vue de face d'un ensemble de face avant destiné à équiper un véhicule et conforme à l'invention ;
[Fig.2] représente une grille de l'ensemble de face avant visible sur la figure 1 et isolée des autres éléments de l'ensemble de face avant ;
[Fig.3] représente un dispositif d'obturation de l'ensemble de face avant visible sur la figure 1 et isolé des autres éléments de l'ensemble de face avant ;
[Fig.4] représente une vue arrière de l'ensemble de face avant visible sur la figure 1 ;
[Fig.5] représente une agrandissement d'un dispositif d'actionnement destiné à piloter au moins un volet de l'ensemble de face avant.

Il faut tout d'abord noter que si les figures exposent l'invention de manière détaillée pour sa mise en oeuvre, ces figures peuvent bien entendu servir à mieux définir l'invention, le cas échéant. Il est également à noter que ces figures n'exposent que des exemples de réalisation de l'invention.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

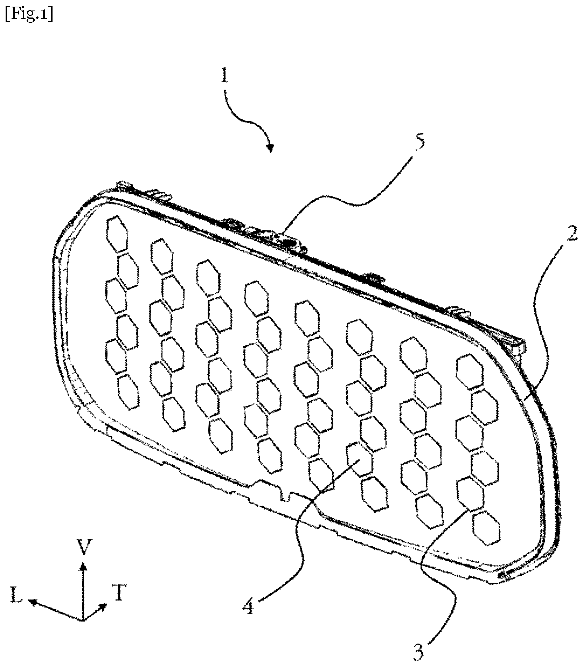

La figure 1 illustre un ensemble de face avant 1 destiné à équiper un véhicule, et plus spécifiquement un véhicule automobile. L'ensemble de face avant 1 est par exemple une calandre.

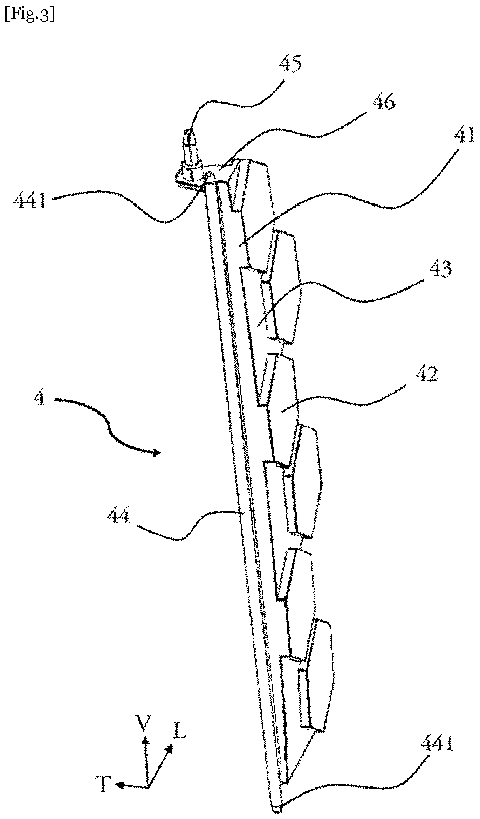

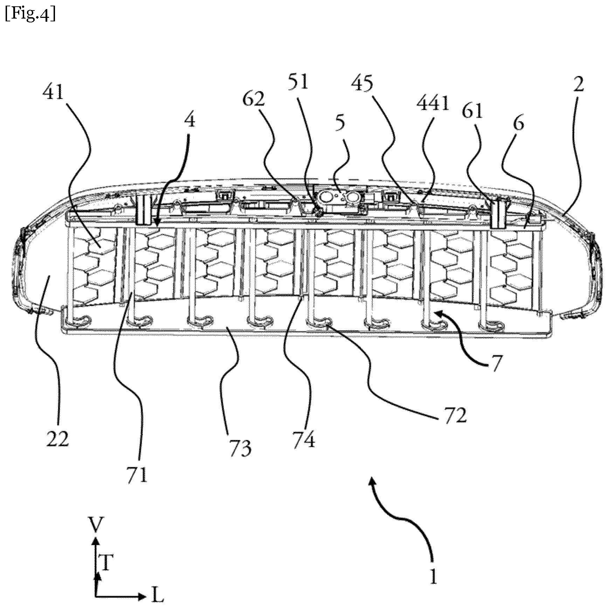

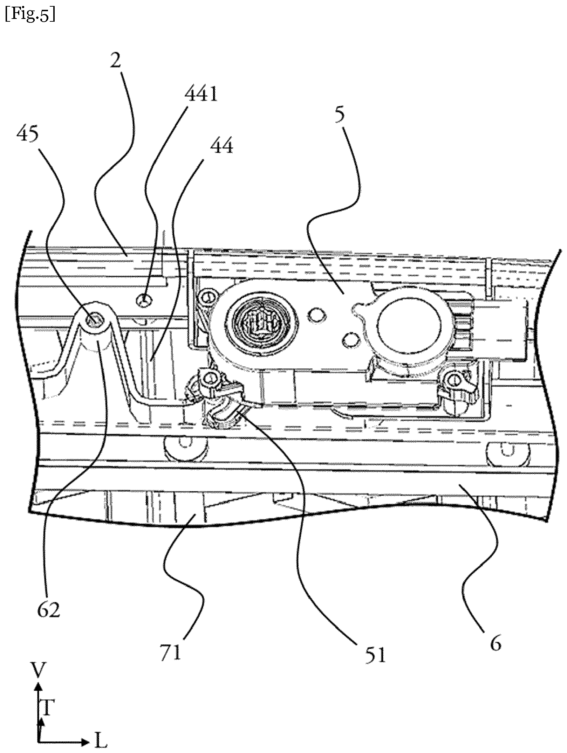

L'ensemble de face avant 1 comporte une grille 2 dans laquelle est ménagé au moins un passage 3 par lequel un flux d'air est apte à traverser la grille 2 pour entrer dans le compartiment moteur du véhicule. Tel que visible sur la figure 1, ce passage 3 est obstrué par un dispositif d'obturation 4 qui sera décrit plus en détail en lien avec les figures 3 et 4. Le dispositif d'obturation 4 est piloté par une unité de contrôle, non représentée, commandant un dispositif d'actionnement 5 qui sera décrit plus en détail en lien avec la figure 5. On constate néanmoins sur cette figure 1 que l'élément d'obturation 4 et une face extérieure de la grille 2 s'étendent dans un même plan et c'est cela qu'on considère que le dispositif d'obturation comprend un élément d'obturation qui affleure ladite grille, côté extérieure de celle-ci.

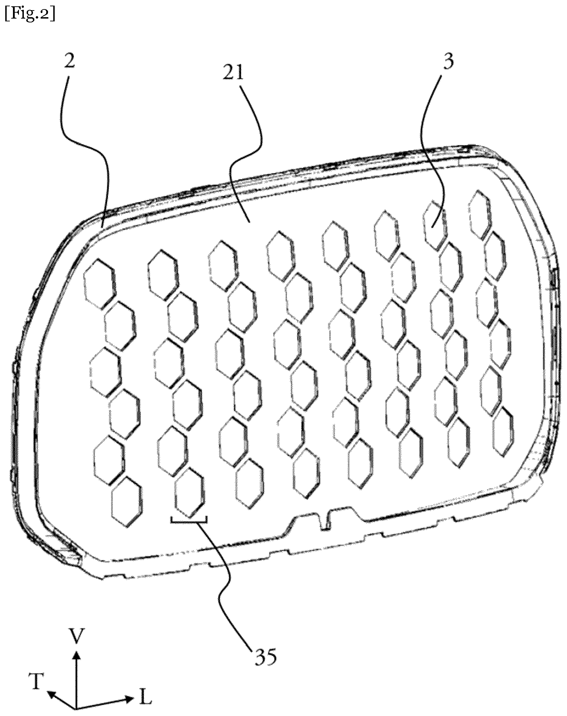

La figure 2 illustre plus précisément la grille 2 de l'ensemble de face avant 1. Cette grille 2 présente une première face 21 délimitant la grille 2 et par laquelle le flux d'air est apte à entrer dans le compartiment moteur du véhicule lorsque l'ensemble de face avant 1 équipe ledit véhicule. Opposée à la première face 21, la grille 2 est délimitée par une deuxième face 22, visible sur la figure 4. En outre, la grille 2 comprend, dans le mode de réalisation représenté, une pluralité de passages 3, chaque passage 3 s'étendant entre la première face 21 et la deuxième face 22 de la grille 2.

Tel que visible sur la figure 2, les passages 3 sont réparties en série 35 le long de la grille 2 selon une direction longitudinale parallèle à l'axe L à égale distance les unes des autres, chacune de ces séries 35 de passages 3 s'étend selon une direction verticale parallèle à l'axe V. En outre, dans le mode de réalisation représenté, chaque série 35 comprend six passages 3. Il convient de noter que dans un mode de réalisation alternatif, les séries 35 peuvent comprendre un nombre différent de passages 3. Par ailleurs, ces séries 35 peuvent comprendre chacune un nombre différent de passages 3 d'une série 35 à une autre.

Les passages 3 présentent avantageusement une forme d'hexagone régulier dont les dimensions des côtés sont similaires d'un passage 3 à l'autre d'une même série 35. Une telle répétition de forme permet de disposer les passages 3 selon un motif régulier, c'est-à-dire selon une alternance régulière, permettant d'homogénéiser la circulation du flux d'air à travers la grille 2.

La figure 3 illustre un volet 41 du dispositif d'obturation 4. Ce volet 41 s'étend, à l'instar des séries de passages 3, principalement selon la direction verticale, parallèlement à l'axe V. Il est à noter qu'un seul volet 41 est représenté sur la figure 3, néanmoins, dans le mode de réalisation représenté, le dispositif d'obturation 4 comprend une pluralité de volets 41, et plus particulièrement un nombre de volet 41 égale au nombre de séries 35 de passages 3 sur la grille 2.

On comprend de ce qui précède qu'un volet 41 du dispositif d'obturation 4 est avantageusement configuré pour être complémentaire d'une série 35 de passages 3. À cet effet, le volet 41 comprend au moins un élément d'obturation 42. Dans le mode de réalisation représenté, chaque volet 41 comprend une pluralité d'éléments d'obturation 42. Plus précisément, chaque volet 41 comprend un nombre d'éléments d'obturation 42 égale au nombre de passages 3 de la série 35 à laquelle le volet 41 est associé. En d'autres termes, le volet 41 comprend six éléments d'obturation 42, chaque élément d'obturation 42 étant destiné à obturer l'un des six passages 3 de la série 35 associé. Il convient de noter que l'on entend par associé le fait que le volet 41 est directement destiné à obturer les passages 3 de la série 35 dont le volet 41 est complémentaire.

Les éléments d'obturation 42 se logent dans les passages 3. Ainsi, les éléments d'obturation 42 présentent une forme complémentaire de celle des passages 3. Ces formes similaires entre l'élément d'obturation 42 et le passage 3 permettent à l'élément d'obturation 42 de pénétrer dans le passage 3. Plus spécifiquement, l'élément d'obturation 42 pénètre dans le passage 3 de telle sorte qu'une face de contact 43 du volet 41 vient au contact de la deuxième face 22 de la grille 2. Cette deuxième face 22 comprend une portion de support, distincte des passages 3 ; la face de contact 43 du volet 41 venant au contact de cette portion de support.

Les éléments d'obturation 42 font saillies depuis ladite face de contact 43 du volet 41 sur une dimension égale à la distance séparant la première face 21 et la deuxième face 22 de la grille 2. On comprend que lorsque la face de contact 43 du volet 41 vient au contact de la deuxième face 22 de la grille 2, et plus spécifiquement de la portion de support de la deuxième face 22, les éléments d'obturation 42 sont alors affleurant avec la première face 21 de la grille 2.

Il convient de noter que chaque élément d'obturation 42 présente une extrémité libre ou face libre distante de la partie de l'élément d'obturation 42 qui prend naissance sur la face de contact 43. Cette extrémité libre de l'élément d'obturation 42 s'étend dans un plan d'extension confondu avec le plan d'extension de la première face 21 de la grille 2 au niveau du passage 3 associé audit élément d'obturation 42 quand l'élément d'obturation 42 obture le passage et la face de contact 43 est au contact de la deuxième face 22 de la grille 2.

En outre, ce volet 41 est apte à prendre une première position dans laquelle au moins l'une des séries de passages 3 est obturée par le volet 41, c'est-à-dire que la circulation du flux d'air à travers la grille 2 est interdite par le volet 41, et une deuxième position dans laquelle le volet 41 ouvre le passage 3, c'est-à-dire que la circulation du flux d'air à travers la grille 2 est autorisée par le volet 41. Les volets 41 sont mobiles en rotation entre leur première position et leur deuxième position. Dans la première position des volets 41, les éléments d'obturation 42 s'étendent au moins en partie dans des passages 3 distincts les uns des autres. Les éléments d'obturation 42 étant alors affleurant avec la première face 21 de la grille 2, la face de contact 43 vient au contact de la deuxième face 22 de la grille 2 opposée à la première face 21.

Ce changement de position du volet 41 est permise par un arbre de rotation 44 s'étendant sur un bord longitudinal du volet 41 d'une extrémité verticale à l'autre. Cette arbre de rotation 44 comprend à chaque extrémité des pions de rotation 441 qui se logent dans des paliers de rotation ménagés dans la grille 2, de sorte à permettre la rotation du volet 41 autour d'un axe qui passe par l'arbre de rotation 44.

Le volet 41 comprend également un pion de commande 45 ménagé à au moins l'une des extrémités verticales du volet 41. Plus précisément, ce pion de commande 45 est ménagé sur une languette 46 s'étendant perpendiculairement à la face de contact 43. Le pion de commande 45 est logé dans un palier d'un levier de commande, tel qu'il sera décrit plus en détail en lien avec les figures 4 et 5, le passage du volet 41 de sa première position à sa deuxième position, et vice-et-versa, étant opéré par actionnement du levier.

Les figures 4 et 5 illustrent respectivement une vue arrière de l'ensemble de face avant 1 et une vue focalisée au niveau du dispositif d'actionnement 5.

Tel que visible sur la figure 4, les volets 41 sont dans leur première position dans laquelle les volets 41 obturent les séries 35 et les passages 3 associés. Plus spécifiquement, la figure 4 permet d'apercevoir la deuxième face 22 de la grille 2. Tel que représenté sur cette figure 4, l'ensemble de face avant 1 comprend une pluralité de volets 41 répartis le long de la direction longitudinale d'allongement de la grille 2.

Les volets 41 sont liés à un levier 6 mobile en translation selon la direction longitudinale. Dans le mode de réalisation représenté, le levier 6 est bloqué selon la direction verticale et selon la direction transversale, parallèlement à l'axe T, par des éléments de maintien 61. Ces éléments de maintien 61 sont solidaires de la grille 2 et empêchent le déplacement du levier 6 selon les directions transversale et verticale, tout en permettant le déplacement du levier 6 selon la direction longitudinale.

Le levier 6 comprend un palier 62 dans lequel est logé le pion de commande 45. Le levier 6 est relié aux volets 41 par l'intermédiaire du pion de commande 45 de chaque volet et du palier 62 associé. La translation du levier 6 entraîne le déplacement du pion de commande 45 de chaque volet 41. On comprend plus largement que la translation du levier 6 permet de faire passer les volets 41 de l'une de leurs positions à l'autre.

Pour permettre la translation du levier 6, le dispositif d'actionnement 5 comprend une fourche 51 configurée pour générer la translation du levier 6. Tel que particulièrement visible sur la figure 5, la fourche 51 est en prise sur un élément du levier 6 de telle sorte qu'un déplacement de la fourche 51 entraîne la translation du levier 6 ; le pion de commande 45 en prise dans le palier 62 du levier 6 accompagne le mouvement de translation du levier 6 par une rotation du volet autour de l'arbre de rotation 44.

En outre, l'ensemble de face avant 1 comprend un moyen d'émission lumineux 7 comprenant au moins un dispositif lumineux 71. Dans le mode de réalisation représenté, le moyen d'émission lumineux 7 comprend une pluralité de dispositifs lumineux 71 et plus particulièrement un nombre de dispositif lumineux 71 égal au nombre de volets 41 et donc au nombre de séries 35.

Ces dispositifs lumineux 71 s'étendent, à l'instar des séries 35 et des volets 35, principalement selon une direction verticale. Chaque dispositif lumineux 71 est apte à prendre une première configuration dans laquelle le dispositif lumineux 71 est au droit du passage 3, c'est-à-dire dans le mode de réalisation représenté au droit de la série 35 de passages 3, et une deuxième configuration, visible sur la figure 4, dans laquelle le dispositif lumineux 71 est au droit de la portion de support de la grille 2.

À l'instar des volets 41, le passage d'une configuration à l'autre est commandé par le levier 6 et donc contrôlé par le dispositif d'actionnement 5. À cet effet, chaque dispositif lumineux 71 est solidaire su levier 6 par une extrémité verticale du dispositif lumineux 7. L'extrémité opposée des dispositifs lumineux 71 circule dans une rainure 72 assurant le rôle de guide des dispositifs lumineux 71. Chaque dispositif lumineux 71 circule dans une rainure 72 distincte.

Les rainures 72 sont ménagées dans une portion de guidage 73 s'étendant selon la direction longitudinale perpendiculairement à la direction verticale au niveau d'une extrémité des dispositifs lumineux opposée au levier 6. Cette portion de guidage 73 comprend une pluralité de paliers 74 permettant de maintenir, conjointement avec la grille 2, les pions de rotation 441 à une position fixe pour assurer le changement de position des volets 41.

La présente invention atteint bien le but qu'elle s'était fixé en proposant un ensemble de face avant dont la face par laquelle le flux d'air est destiné à entrer forme une surface étanche et avantageusement lisse lorsque les volets sont dans une position interdisant le passage du flux d'air à travers la grille. Une telle face de l'ensemble de face avant masque intelligemment les passages ménagés dans la grille lorsque le volet est dans ladite position dans laquelle il empêche le passage du flux d'air.

## Revendications

1. Ensemble de face avant (1) destiné à équiper un véhicule automobile, l'ensemble de face avant (1) comprenant une grille (2) et un dispositif d'obturation (4), la grille (2) comprenant au moins un passage (3) par lequel un flux d'air est apte à traverser la grille (2), le dispositif d'obturation (4) comprenant au moins un volet (41) apte à prendre une première position dans laquelle le volet (41) obture le passage (3) et une deuxième position dans laquelle le volet (41) ouvre le passage (3), le volet (41) comprenant un élément d'obturation (42) qui s'étend au moins en partie dans le passage (3) de la grille (2) lorsque le volet (41) est dans sa première position.

2. Ensemble de face avant (1) selon la revendication précédente, dans lequel la grille (2) est délimitée par une première face (21) et une deuxième face (22), le passage (3) s'étendant entre la première face (21) et la deuxième face (22), l'élément d'obturation (42) du volet (41) étant affleurant avec l'une desdites faces (21,22) de la grille (2).

3. Ensemble de face avant (1) selon la revendication précédente, dans lequel le volet (41) présente une face de contact (43) destinée à venir au contact d'une face de la grille (2) qui est opposée à celle avec laquelle la portion du volet (41) est affleurante.

4. Ensemble de face avant (1) selon la revendication précédente, dans lequel la grille (2) comprend une portion de support, ladite portion de support formant la partie de la grille (2) distincte de l'au moins un passage (3), la face de contact (43) du volet (41) venant au contact de ladite portion de support.

5. Ensemble de face avant (1) selon l'une quelconque des revendications précédentes, dans lequel l'élément d'obturation (42) du volet (41) qui s'étend dans le passage (3) de la grille (2) présente une forme complémentaire dudit passage (3).

6. Ensemble de face avant (1) selon l'une quelconque des revendications 3 et 4, dans lequel l'élément d'obturation (42) fait saillie de la face de contact (43) du volet (41).

7. Ensemble de face avant (1) selon l'une quelconque des revendications précédentes, dans lequel le volet (41) comprend un arbre de rotation (44) et un pion de commande (45), l'ensemble de face avant (1) comprenant au moins un levier (6) lié à l'au moins un volet (41) par le pion de commande (45), le levier (6) étant mobile en translation pour changer la position du volet (41).

8. Ensemble de face avant (1) selon l'une quelconque des revendications précédentes, **caractérisé en ce que** l'au moins un volet (41) comprend une pluralité d'éléments d'obturation (42), la grille (2) comprenant une pluralité de passages (3), au moins un des élément d'obturation (42) étant destiné à s'étendre dans un des passages (3) dédié à l'élément d'obturation (42).

9. Ensemble de face avant (1) selon l'une quelconque des revendications précédentes, **caractérisé en ce que** le dispositif d'obturation (4) comprend une pluralité de volets (41), Au moins deux des volets (41) passant simultanément de leur première position à leur deuxième position.

10. Ensemble de face avant selon l'une quelconque des revendications 4 à 9, comprenant au moins un dispositif lumineux (71) apte à prendre une première configuration dans laquelle le dispositif lumineux est au droit du passage (3) et une deuxième configuration dans laquelle le dispositif lumineux (71) est au droit de la portion de support de la grille (2).

11. Véhicule automobile comprenant un ensemble de face avant (1) selon l'une quelconque des revendications précédentes destiné à être traversé par un flux d'air.
